# EUROPÄISCHE PATENTSCHRIFT

(11) **EP 1 110 813 B1**
(45) Veröffentlichungstag und Bekanntmachung des Hinweises auf die Patenterteilung: **07.01.2009**
(21) Anmeldenummer: 00126940.6
(22) Anmeldetag: 08.12.2000
(51) Int. Cl.: B60Q 1/00, F21V 17/00

(54) **Fahrzeugscheinwerfer**
Vehicle headlamp
Phare de véhicule

(30) Priorität: 22.12.1999 DE 19961858
(43) Veröffentlichungstag der Anmeldung: 27.06.2001
(73) Patentinhaber: Hella KGaA Hueck & Co., 59552 Lippstadt (DE)
(72) Erfinder: Böckeler, Franz-Josef, 59594 Soest (DE); Spork, Heinz-Uwe, 33154 Salzkotten-Mantinghausen (DE)

(56) Entgegenhaltungen:
- DE-A1- 19 507 585
- DE-A1- 19 519 654
- DE-A1- 19 824 053
- DE-U1- 29 822 704

## Beschreibung

Die Erfindung betrifft einen Fahrzeugscheinwerfer nach dem Oberbegriff des Patentanspruchs 1.

Aus der DE 41 20 503 A1 ist ein Fahrzeugscheinwerfer bekannt, der in einem Gehäuse einen Reflektor aufweist, dem zu einer transparenten Abdeckscheibe hin ein Abdeckrahmen vorgelagert ist.

Insbesondere bei optiklosen Abdeckscheiben werden aus designerischen Gründen die Abdeckrahmen in Teilbereichen farblich gestaltet. So wird beispielsweise eine Seitenwandung des Abdeckrahmens zu einer benachbarten Blinkleuchte hin gelblich bzw. orangefarbig lackiert.

Nachteilig bei den bekannten Fahrzeugscheinwerfern ist, dass ein hochglanzbedampfter Abdeckrahmen eines Hauptscheinwerfers durch die farbliche Gestaltung des Designs sehr aufwendig unter Zuhilfenahme von Schablonen teillackiert werden muss. Dabei entsteht ein relativ hoher Ausschuss, da beim Lackieren beim Aufsetzen der Schablonen Ausfälle entstehen.

Aus der DE 198 24 053 A1 ist ein Fahrzeugscheinwerfer gemäss dem Obenbegriff des Anspruhs 1, mit einem Gehäuse bekannt, in dem mehrere Reflektoren sowie ein Abdeckrahmen angeordnet sind. Das Gehäuse ist vorderseitig mit einer transparenten Abdeckscheibe abgedeckt. Der Abdeckrahmen ist mit einer hochglänzenden silberfarbigen Schicht versehen und umrahmt die Reflektoren, wobei zu einer benachbarten Leuchte eine Seitenwandung gebildet ist. Die Seitenwandung ist einstückig mit dem Abdeckrahmen verbunden, so dass eine andersartige farbliche Gestaltung der Seitenwandung relativ aufwändig ist.

Aus der DE 195 07 585 A1 ist ein Fahrzeugscheinwerfer mit einem Gehäuse bekannt, in dem eine Mehrzahl von Reflektoren angeordnet sind. Die Reflektoren sind vorderseitig mit einem Abdeckrahmen versehen, wobei zu einer benachbarten Leuchte hin eine Seitenwandung gebildet ist. Die Seitenwandung ist einstückig mit dem Abdeckrahmen verbunden und weist die gleiche reflektierende Beschichtung auf. Das Aufbringen einer andersartigen Beschichtung auf die Seitenwandung ist relativ aufwändig.

Aufgabe der Erfindung ist es daher, den bekannten Fahrzeugscheinwerfer so zu verbessern, dass die farbliche Gestaltung des Abdeckrahmens vereinfacht und entstehender Ausschuss durch die Lackierung verringert wird.

Diese Aufgabe wird erfindungsgemäß in Verbindung mit dem Oberbegriff des Anspruches 1 dadurch gelöst, dass der Seitenwandung des Abdeckrahmens zu der benachbarten Leuchte hin eine farblich gestaltbare Abdeckung vorgelagert ist.

Nach der Erfindung muss ein hochglanzbedampfte Abdeckrahmen eines Fahrzeugscheinwerfers, beispielsweise eines Hauptscheinwerfers, bei farblicher Gestaltung durch das Design nicht mehr sehr aufwendig unter Zuhilfenahme von Schablonen teil-lackiert werden. Es lassen sich durch die zusätzliche Abdeckung auch Formen und Kanten bilden, die mit Schabloniertechnik nicht erzielbar sind. Die Abdeckung kann problemlos als farblich gestaltetes Teil, beispielsweise als lackiertes Teil, aufgesetzt werden. Der Ausschuss wird geringer, da die beim Lackieren durch das Aufsetzen der Schablonen entstehenden Ausfälle nicht auftreten.

Gemäß einer bevorzugten Ausführungsform der Erfindung ist die Abdeckung mit dem Abdeckrahmen verrastbar.

Dadurch, dass die Abdeckung und der Abdeckrahmen so ausgebildet sind, dass sie miteinander verrastbar sind, wird die Montage des Abdeckrahmens erleichtert.

Nach einer weiteren bevorzugten Ausführungsform der Erfindung weist die Seitenwandung auf ihrer der benachbarten Leuchte zugewandten Außenwandung an ihrem der Abdeckscheibe abgewandten hinteren Bereich eine Tasche auf, in die die Abdeckung mit einer Lasche einsteckbar ist. Die Abdeckung weist dabei an ihrem der Lasche abgewandten vorderen Rand zur Seitenwandung des Abdeckrahmens hin einen Vorsprung auf, dessen zur Lasche hin gerichtete Auflagefläche auf eine zur Abdeckscheibe hin gerichtete Stirnfläche der Seitenwandung auflegbar ist. Die Auflagefläche der Abdeckung und die Stirnfläche der Seitenwandung sind schräg nach hinten geneigt, so dass im verrasteten Zustand die Auflagefläche verhakend über die Stirnfläche greift.

Durch die verhakenden Flächen und die in die Tasche einsteckbare Lasche der Abdeckung wird bei einfacher Montage ein sicherer Sitz der Abdeckung gewährleistet.

Gemäß einer weiteren bevorzugten Ausführungsform der Erfindung weist der Abdeckrahmen in einem der Seitenwandung benachbarten Grund eine Führungsnut auf, in der die Abdeckung seitlich gehalten wird. Die Führungsnut weist in ihrem Boden einen die Tasche bildenden Schlitz auf, durch den die Lasche der Abdeckung steckbar ist.

Die Seitenwandung weist auf ihrer der benachbarten Leuchte abgewandten Rückseite mindestens eine rampenförmige Rippe auf, die mit einem Durchbruch der Lasche verrastet. Durch die rampenförmige Rippe lässt sich die Lasche unter einer Vorspannung überschieben und in ihrer Endstellung verrasten.

Die Montage kann dabei so angelegt werden, dass alles an Krafteinfluss und Berührung von der nicht sichtbaren Seite des Abdeckrahmens erfolgt und es zu keinem Ausschuss kommen kann. Die hochglanzbedampften Flächen des Abdeckrahmens müssen bei der Montage der Abdeckung nicht berührt werden, so dass es zu keiner Beschädigung bzw. Ausschuss kommen kann.

Weitere Einzelheiten der Erfindung ergeben sich aus der nachfolgenden ausführlichen Beschreibung und den beigefügten Zeichnungen, in den bevorzugte Ausführungsformen der Erfindung beispielsweise veranschaulicht sind.

In den Zeichnungen zeigen:

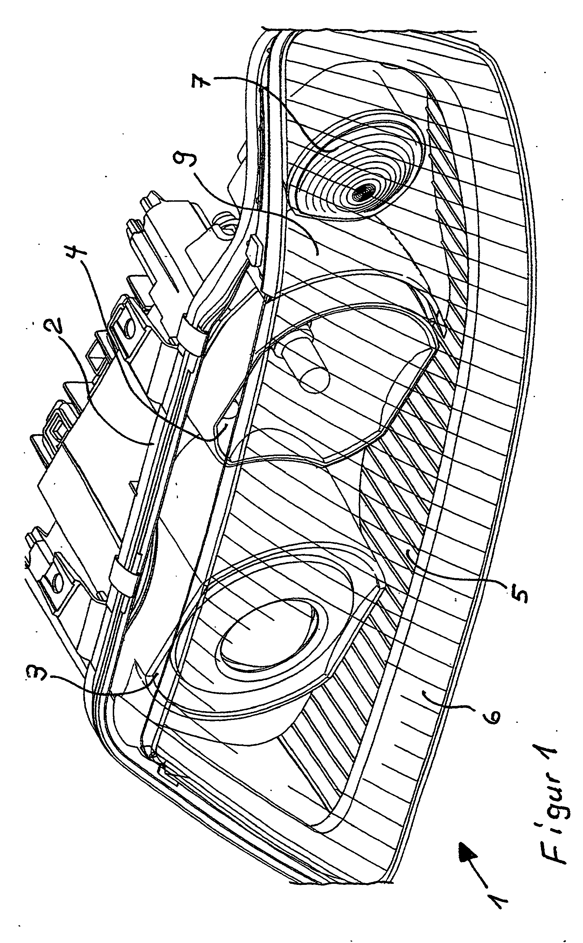

- Figur 1:: Eine räumliche Darstellung eines Fahrzeugscheinwerfers von vorn gesehen,

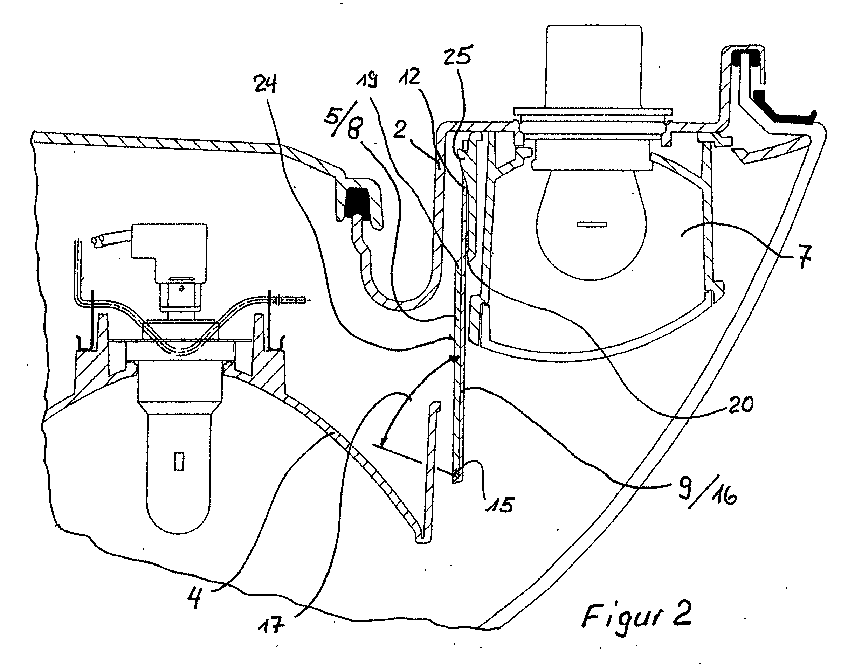

- Figur 2:: eine Draufsicht auf den Fahrzeugscheinwerfer von Figur 1 im Schnitt und Ausriss,

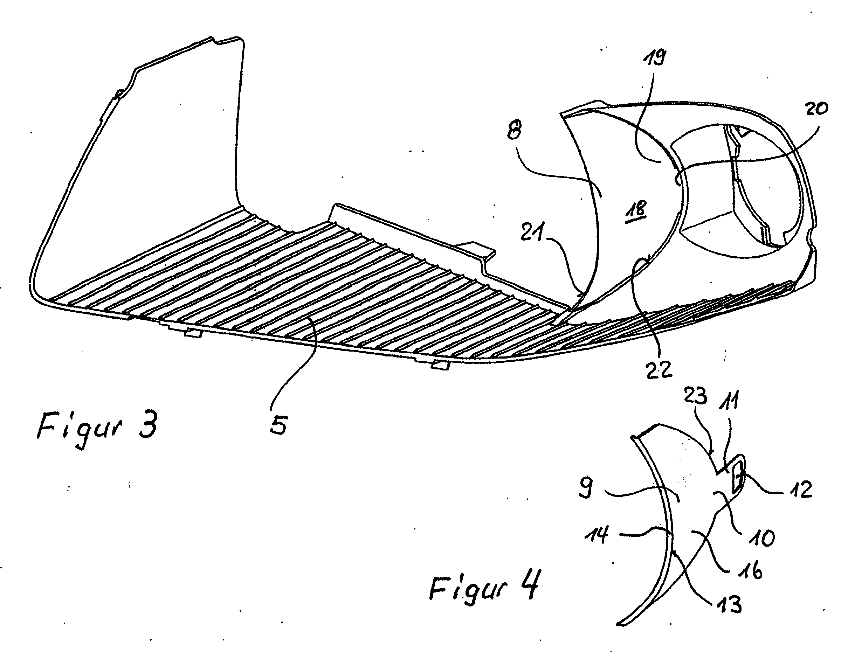

- Figur 3:: eine räumliche Darstellung des Abdeckrahmens von Figur 1 und
- Figur 4:: eine räumliche Darstellung der Abdeckung von Figur 1.

Ein Fahrzeugscheinwerfer 1 besteht im Wesentlichen aus einem Gehäuse 2, Reflektoren 3, 4, einem Abdeckrahmen 5 und einer Abdeckscheibe 6.

In dem Gehäuse 2 ist ein innerer Reflektor 3 und äußerer Reflektor 4, der von einer als Blinkleuchte ausgebildeten Leuchte 7 benachbart ist, angeordnet. Das Gehäuse 2 wird nach vorn von der den Reflektoren 3, 4 vorgelagerten optiklosen Abdeckscheibe 6 abgeschlossen. Zwischen den Reflektoren 3, 4 und der Abdeckscheibe 6 ist der Abdeckrahmen 5 angeordnet.

Der Abdeckrahmen 5 weist eine Seitenwandung 8 auf, zu der die Leuchte 7 benachbart ist. Der Seitenwandung 8 ist zu der Leuchte 7 hin eine Abdeckung 9 vorgelagert. Entsprechend dem vorgegebenen Design ist die Abdeckung farblich gestaltet, beispielsweise lackiert.

Die Abdeckung 9 ist in ihrer Form an die Seitenwandung 8 des Abdeckrahmens 5 angepaßt. An ihrem der Abdeckscheibe 6 abgewandten hinteren Bereich 10 weist die Abdeckung 9 eine Lasche 11 mit einem Durchbruch 12 auf. An ihrem der Lasche 11 bzw. dem hinteren Bereich 10 abgewandten vorderen Rand 13 weist die Abdeckung 9 zur Seitenwandung 8 einen Vorsprung 14 mit einer zur Lasche 11 hin hinterschnittenen Auflagefläche 15 auf. Die Auflagefläche 15 bildet mit der Wandung 16 der Abdeckung 9 eine Winkel 17 von ca. 65°.

Die Seitenwandung 8 weist auf ihrer der benachbarten Leuchte 7 zugewandten Außenwandung an ihrem der Abdeckscheibe 6 abgewandten hinteren Bereich eine Tasche 20 auf, in die die Abdeckung 9 mit ihrer Lasche 11 einsteckbar ist. Zur Abdeckscheibe 6 hin weist die Seitenwandung 8 eine Stirnfläche 21 auf. Entsprechend der Auflagefläche 15 ist die Stirnfläche 21 ebenfalls geneigt, so dass sich die Auflagefläche 15 auf der Stirnfläche 21 abstützen kann, wobei die Auflagefläche 15 im verrasteten Zustand verhakend über die Stirnfläche 21 greift.

Der Abdeckrahmen 5 weist in einem der Seitenwandung 8 benachbarten Grund eine Führungsnut 22 auf, der die Abdeckung 9 mit ihrem hinteren Rand 23 seitlich gehalten wird. Die Führungsnut 22 weist in ihrem Boden einen Schlitz auf, der die Tasche 20 bildet, in die die Lasche 11 steckbar ist.

Die Seitenwandung 8 weist auf ihrer der benachbarten Leuchte 7 abgewandten Rückseite 24 eine rampenförmige Rippe 25 auf, die mit dem Durchbruch 12 der Lasche 11 verrastet.

Der aus Kunststoff ausgebildete Abdeckrahmen 5 ist hochglanzbedampft und die ebenfalls aus Kunststoff ausgebildete Abdeckung 9 ist lackiert. Die Handhabung des Montagevorganges erfolgt durch ein Halten des Abdeckrahmens 5 im Bereich der Blinkleuchte bzw. Leuchte 7 von der Rückseite her, so dass ein Berühren der hochglanzbedampften Flächen nicht nötig ist. Die Abdeckung 9 wird von vorn auf die Seitenwandung 8 aufgesteckt. Dabei wird die Lasche 11 in die Tasche 20 eingeschoben, so dass in der Endstellung der Durchbruch 12 mit der Rippe 25 verrastet.

## Patentansprüche

1. Fahrzeugscheinwerfer mit einem Gehäuse (2) enthaltend Reflektoren (3, 4) und einem Abdeckrahmen (5), der zwischen den Reflektoren (3, 4) und einer das Gehäuse (2) nach vorn abschließenden transparenten optiklosen Abdeckscheibe (6) angeordneten ist, wobei der Abdeckrahmen (5) eine Seitenwandung (8) aufweist, zu der eine Leuchte benachbart angeordnet ist und an der der Abdeckrahmen (5) zu der Leuchte (7) hin farblich gestaltbar ist, **dadurch gekennzeichnet, dass** zu der benachbarten Leuchte (7) hin eine farblich gestaltbare Abdeckung (9) auf die Seitenwandung (8) aufgesteckt ist, wobei die Abdeckung (9) in ihrer Form an die Seitenwandung (8) des Abdeckrahmens (5) angepasst ist.

2. Fahrzeugscheinwerfer nach Anspruch 1, **dadurch gekennzeichnet, dass** die Abdeckung (9) mit dem Abdeckrahmen (5) verrastbar ist.

3. Fahrzeugscheinwerfer nach Anspruch 2, **dadurch gekennzeichnet, dass** die Seitenwandung (8) auf ihrer der benachbarten Leuchte (7) zugewandten Außenwandung (18) an ihrem der Abdeckscheibe (6) abgewandten hinteren Bereich (19) eine Tasche (20) aufweist, in die die Abdeckung (9) mit einer Lasche (11) einsteckbar ist.

4. Fahrzeugscheinwerfer nach Anspruch 3, **dadurch gekennzeichnet, dass** die Abdeckung (9) an ihrem der Lasche (11) abgewandten vorderen Rand (13) zur Seitenwandung (8) des Abdeckrahmens (5) hin einen Vorsprung (14) aufweist, dessen zur Lasche (11) hin gerichtete Auflagefläche (15) auf eine zur Abdeckscheibe (6) hin gerichtet Stirnfläche (21) der Seitenwandung (8) auflegbar ist.

5. Fahrzeugscheinwerfer nach Anspruch 4, **dadurch gekennzeichnet, dass** die Auflagefläche (15) der Abdeckung (9) und die Stirnfläche (21) der Seitenwandung (8) schräg nach hinten geneigt sind, so dass im verrasteten Zustand die Auflagefläche (15) verhakend über die Stirnfläche (21) greift.

6. Fahrzeugscheinwerfer nach einem der Ansprüche 3 bis 5, **dadurch gekennzeichnet, dass** der Abdeckrahmen (5) in einem der Seitenwandung (8) benachbarten Grund eine Führungsnut (22) aufweist, in der die Abdeckung (9) seitlich gehalten wird.

7. Fahrzeugscheinwerfer nach Anspruch 6, **dadurch gekennzeichnet, dass** die Führungsnut (22) in ihrem Boden einen Schlitz aufweist, durch den die Lasche (11) der Abdeckung (9) steckbar ist.

8. Fahrzeugscheinwerfer nach einem der Ansprüche 3 bis 7, **dadurch gekennzeichnet, dass** die Seitenwandung (8) auf ihrer der benachbarten Leuchte (7) abgewandten Rückseite (24) mindestens eine rampenförmige Rippe (25) aufweist, die mit einem Durchbruch (12) der Lasche (11) verrastet.

9. Fahrzeugscheinwerfer nach einem der Ansprüche 1 bis 8, **dadurch gekennzeichnet, dass** der Abdeckrahmen (5) und die Abdeckung (9) aus Kunststoff ausgebildet sind.

## Claims

1. Headlamp for vehicles comprised of a housing (2) containing reflectors (3, 4) and a cover frame (5) installed between the reflectors (3, 4) and a transparent, unpatterned cover lens (6) terminating the housing (2) towards the front, wherein the cover frame (5) has a side wall (8) adjacent to which there is a lamp such that the cover frame (5) can have a colored design at the side of the lamp (7), **characterized in that** a cover (9) of a customizable color design is plugged onto the side wall (8) facing the adjacent lamp (7) and that the shape of the cover (9) is adapted to the side wall (8) of the cover frame (5).

2. Headlamp for vehicles of claim 1, **characterized in that** the cover (9) can be snapped onto the cover frame (5).

3. Headlamp for vehicles of claim 2, **characterized in that** the outer face (18) of the side wall (8) facing the adjacent lamp (7) has a pocket (20) on its rear section (19) facing away from the cover lens (6) such that a latch (11) of the cover (9) can slip into the pocket (20).

4. Headlamp for vehicles of claim 3, **characterized in that** the cover (9) has a sill (14) along its front edge (13) facing away from the latch (11) but towards the side wall (8) of the cover frame (5) such that the sill's (14) resting surface (15) pointing towards the latch (11) can come to rest on a front face (21) of the side wall (8) that faces towards the cover frame (6).

5. Headlamp for vehicles of claim 4, **characterized in that** the resting surface (15) of the cover (9) and the front face (21) of the side wall (8) slant towards the back such that, when all elements are snapped on, the resting surface (15) extends over and hooks onto the front face (21).

6. Headlamp for vehicles of claims 3 to 5, **characterized in that** the cover frame (5) has a guiding groove (22) along its bottom edge adjacent to the side wall (8) such that the guiding groove (22) holds the cover (9) on one side.

7. Headlamp for vehicles of claim 6, **characterized in that** the guiding groove (22) has a slot along its bottom such that the latch (11) of the cover (9) can be inserted in said slot.

8. Headlamp for vehicles of claims 3 to 7, **characterized in that** at least one ramp-shaped fin (25) is located on the rear side (24) of the side wall (8) that faces away from the adjacent lamp (7) such that said fin (25) can snap into a breakthrough (12) of the latch (11).

9. Headlamp for vehicles of claims 1 to 8, **characterized in that** the cover frame (5) and the cover (9) are made of a plastic material.

## Revendications

1. Projecteur de véhicule avec un boîtier (2) contenant des réflecteurs (3, 4) et un cache (5), se trouvant entre les réflecteurs (3, 4) et une glace externe (6) transparente sans optique fermant le boîtier (2) vers l'avant, le cache (5) présentant une paroi latérale (8) en direction de laquelle une lampe voisine est disposée et sur laquelle le cache (5) en direction de la lampe (7) peut être conçu de couleur, **caractérisé en ce que,** en direction de la lampe (7) voisine, un recouvrement (9) pouvant être de couleur se trouve sur la paroi latérale (8), la forme de ce recouvrement (9) étant adapté à la paroi latérale (8) du cache (5).

2. Projecteur de véhicule selon la revendication 1, **caractérisé en ce que** le recouvrement (9) est emboîtable avec le cache (5).

3. Projecteur de véhicule selon la revendication 2, **caractérisé en ce que** la paroi latérale (8) sur la paroi extérieure (18) dirigée vers la lampe (7) voisine, dans sa section arrière (19) non dirigée vers la glace externe (6), présente une poche (20) dans laquelle le recouvrement (9) peut être emboîté par une patte (11).

4. Projecteur de véhicule selon la revendication 3, **caractérisé en ce que** le recouvrement (9) sur son bord avant (13) non dirigé vers la patte (11) en direction de la paroi latérale (8) du cache (5) présente une saillie (14) dont la surface d'appui (15) dirigée vers la patte (11) peut venir s'appliquer sur une surface frontale (21) de la paroi latérale (8), surface étant dirigée vers la glace externe (6).

5. Projecteur de véhicule selon la revendication 4, **caractérisé en ce que** la surface d'appui (15) du recouvrement (9) et la surface frontale (21) de la paroi latérale (8) sont inclinées à l'oblique vers l'arrière de manière qu'à l'état emboîté, la surface d'appui (15) entre en prise au-dessus de la surface frontale (21).

6. Projecteur de véhicule selon l'une des revendications 3 à 5, **caractérisé en ce que** le cache (5) présente une rainure de guidage (22) dans un fond voisin de la paroi latérale (8), rainure dans laquelle le recouvrement (9) est maintenu latéralement.

7. Projecteur de véhicule selon la revendication 6, **caractérisé en ce que** la rainure de guidage (22) présente en sa base une fente par laquelle la patte (11) du recouvrement (9) peut être emboîtée.

8. Projecteur de véhicule selon l'une des revendications 3 à 7, **caractérisé en ce que** la paroi latérale (8), sur sa face arrière (24) non dirigée vers la lampe voisine (7), comporte au moins une nervure (25) en forme de rampe qui s'emboîte avec une percée (12) de la patte (11).

9. Projecteur de véhicule selon l'une des revendications 1 à 8, **caractérisé en ce que** le cache (5) et le recouvrement (9) consiste en de la matière plastique.
